# FASCICULE DE BREVET EUROPEEN

(11) **EP 3 728 711 B1**
(45) Date de publication et mention de la délivrance du brevet: **14.08.2024**
(21) Numéro de dépôt: 18833956.8
(22) Date de dépôt: 17.12.2018
(51) Int. Cl.: D01F 9/16, C08J 5/04

(54) **PROCÉDÉ DE FABRICATION D'UNE FIBRE DE CARBONE À PARTIR DE COTON RECYCLÉ ET UTILISATION DE LA FIBRE AINSI OBTENUE POUR LA FORMATION D'UN ARTICLE EN MATÉRIAU COMPOSITE**
VERFAHREN ZUR HERSTELLUNG EINER KOHLENSTOFFFASER AUS RECYCELTER BAUMWOLLE UND VERWENDUNG DER AUF DIESE WEISE ERHALTENEN FASER ZUR FORMUNG EINES AUS VERBUNDMATERIAL HERGESTELLTEN ARTIKELS
METHOD FOR PRODUCING A CARBON FIBRE FROM RECYCLED COTTON AND USE OF THE FIBRE OBTAINED IN THIS WAY FOR FORMING AN ARTICLE MADE FROM COMPOSITE MATERIAL

(30) Priorité: 18.12.2017 FR 1762397
(43) Date de publication de la demande: 28.10.2020
(73) Titulaire: Ass.pour le développement de l'enseignement et des recherches auprès des universités, des centres de recherche et des entreprises d'Aquitaine(ADERA), 33608 Pessac Cedex (FR); Institut de Recherche Technologique Jules Verne, 44340 Bouguenais (FR); Faurecia Services Groupe, 92000 Nanterre (FR)
(72) Inventeur: MERCADER, Célia, 33400 Talence (FR); JESTIN, Simon, 33670 Sadirac (FR); LARGEAU, Céline, 44430 Le Loroux Bottereau (FR)
(74) Mandataire: Ipside
(86) Numéro de dépôt international: PCT/FR2018/053326
(87) Numéro de publication internationale: WO 2019/122648

(56) Documents cités:
- WO-A1-2014/081291
- WO-A1-2014/128128
- WO-A1-2015/077807
- WO-A1-2017/108692
- CN-A- 1 587 457
- CN-A- 106 012 107
- CN-A- 106 283 273
- US-B1- 9 695 525

## Description

La présente invention s'inscrit dans le domaine général de la fabrication de matériaux, notamment de matériaux composites, à base de fibres de carbone, à partir de matériaux biosourcés.

Plus particulièrement, la présente invention concerne un procédé de fabrication d'une fibre de carbone, à partir d'un produit manufacturé en coton. L'invention concerne également un procédé plus global de fabrication d'un article en matériau composite à base de fibres de carbone distribuées dans une matrice de résine organique polymère, comprenant la mise en oeuvre d'un procédé de fabrication d'une fibre de carbone selon l'invention.

Les fibres de carbone sont utilisées dans de nombreux domaines, mettant à profit leurs propriétés mécaniques, électriques et thermiques particulièrement avantageuses et leur faible poids.

La fabrication de fibres de carbone à partir de matières biosourcées renouvelables, afin de s'affranchir du problème de l'épuisement programmé des ressources fossiles, a fait l'objet de nombreuses recherches dans les dernières décennies. Il a en particulier été proposé par l'art antérieur de fabriquer de telles fibres à partir de cellulose, un glucide macromoléculaire qui forme la paroi des cellules végétales et qui constitue le principal composant du bois. La cellulose est la matière organique la plus abondante sur la terre. Les fibres de carbone obtenues à base de cellulose présentent en particulier l'avantage d'une très bonne structuration.

Le coton en particulier représente l'un des types de fibres naturelles de cellulose les plus répandus. Les fibres de coton sont majoritairement constituées de cellulose, pour 92 à 95 % en masse. Elles constituent à ce titre la source naturelle la plus pure de cellulose. La cellulose y présente un haut poids moléculaire, avec un degré de polymérisation compris entre 2 000 et 10 000.

Depuis plusieurs décennies, il est consommé dans le monde une très grande quantité de coton, cette quantité étant toujours croissante, en particulier pour la fabrication de produits textiles divers, tels que les vêtements, le linge de maison, les textiles d'ameublement, etc., mais aussi de produits d'hygiène ou à usage médical. Le recyclage du coton, notamment contenu dans les produits manufacturés textiles, en particulier usagés, s'avère par conséquent d'un grand intérêt, en particulier sur le plan écologique.

Il a ainsi été proposé par l'art antérieur de recycler le coton entrant dans la constitution de textiles usagés pour diverses applications, et en particulier pour la fabrication d'articles en fibres de carbone. Une telle application du coton recyclée présente de nombreux avantages, d'un point de vue environnemental mais également d'un point de vue économique. Le prix de revient du coton usagé est en effet largement inférieur à celui des matériaux précurseurs classiques, tels que la cellulose purifiée, notamment issue de l'industrie papetière, ou encore le polyacrylonitrile.

Un tel art antérieur est notamment illustré par la publication de Jagdale et al., 2017, dans Manufacturing Rev. 4, 10: 1-9, qui propose de soumettre un tissu en fibres de coton à un traitement par pyrolyse, pour former un tissu en fibres de carbone.

Il a maintenant été découvert par les présents inventeurs que les fibres de coton usagées issues de produits manufacturés, notamment textiles, peuvent non seulement être utilisées telles quelles pour la fabrication d'articles en fibres de carbone, mais qu'elles peuvent également, et très avantageusement, être soumises à un procédé de filage conventionnel, pour former des fibres à base de cellulose individuelles et continues qui peuvent être mises en oeuvre pour de nombreuses applications, et qui sont particulièrement adaptées pour une application en tant que précurseurs de fibres de carbone, notamment pour la fabrication de matériaux composites à base de telles fibres.

La présente invention vise ainsi à proposer un procédé permettant de recycler le coton contenu dans les produits manufacturés en coton pour former, à bas prix, des fibres de carbone continues, qui soient utilisables pour de nombreuses applications, et en particulier pour la fabrication d'articles en matériaux composites.

A cet effet, il est proposé selon la présente invention un procédé de fabrication d'une fibre de carbone par recyclage de coton, plus précisément de fibres de coton usagées, à partir d'un produit manufacturé en coton, tel qu'un produit textile, notamment un produit d'habillement, d'ameublement ou de lingerie de maison, par exemple un drap, un vêtement de travail, un tee-shirt, un polo, un pantalon, etc., ou un produit d'hygiène ou à usage médical, confectionné en coton.

Le terme coton est ici utilisé, de manière classique en elle-même, pour désigner une fibre cellulosique naturelle, issue des poils séminaux à la surface des graines du cotonnier.

Le produit manufacturé en coton à partir duquel s'applique le procédé selon l'invention, et que ce dernier vise à recycler pour former des fibres de carbone, peut consister en tout produit manufacturé fini ou même semi-fini élaboré par l'activité humaine à partir de matières premières. Il se distingue notamment des matières premières à base de coton, telles que la pulpe ou la poudre issues de la plante coton, qui, même si elles ont été obtenues par des étapes de séparation ou autres traitements à partir de cette plante, ne peuvent en aucun cas être considérées comme étant des produits manufacturés. Le produit manufacturé en coton selon l'invention est formé de fibres de coton usagées, en ce sens que ces fibres ont déjà été utilisées, pour la fabrication même de ce produit manufacturé. Ce produit manufacturé peut lui-même être aussi bien neuf qu'usagé, en particulier être en fin de vie.

Le procédé de fabrication d'une fibre de carbone selon l'invention comprend des étapes successives de :
a/ préparation d'une fibre à base de cellulose, comprenant :
   a1/ la collecte d'un produit manufacturé constitué en coton, notamment, mais non limitativement, à l'exclusion de toute autre matière ;
   a2/ le traitement mécanique de ce produit pour en extraire le coton sous forme de courtes fibres discontinues, notamment de longueur inférieure ou égale à 5 mm, dites fibres de coton de recyclage ;
   a3/ la dissolution desdites fibres de coton de recyclage dans une solution d'acide phosphorique en tant que solution solvant, dans laquelle la cellulose est soluble, pour former une solution dite de filage ;
   a4/ la fabrication d'une fibre continue à base de cellulose par un procédé de filage en voie solvant, également couramment nommé procédé de filage par voie humide ;
   a5/ le cas échéant, l'étirage de la fibre continue à base de cellulose ainsi obtenue, de sorte à former une fibre de plus grande longueur, la mise en oeuvre d'une telle étape d'étirage étant particulièrement préférée dans le cadre de l'invention ;
b/et la carbonisation de la fibre continue à base de cellulose ainsi obtenue pour former une fibre de carbone.

Le procédé selon l'invention peut être tel que défini dans l'une quelconque des revendications 2 à 9.

Le procédé de filage en voie solvant, ou filage par voie humide, mis en oeuvre dans l'étape a4/ du procédé selon l'invention consiste, de manière classique en elle-même, à réaliser une extrusion de la solution de filage à travers une filière de filage, dans un bain dit de coagulation contenant un nonsolvant de la cellulose, qui est miscible avec la solution solvant utilisée pour préparer la solution de filage.

Le procédé de filage en voie solvant mis en oeuvre selon l'invention peut être un procédé dit « au mouillé », selon lequel la filière de filage est immergée dans le bain de coagulation, ou encore un procédé dit « avec espace d'air », selon lequel la filière de filage est placée à une distance, généralement comprise entre 1 mm et 20 cm, au-dessus du bain de coagulation.

Le procédé de fabrication d'une fibre de carbone selon l'invention est simple à mettre en oeuvre, chacune de ses étapes pouvant être réalisée par des techniques connues de l'homme du métier. Il permet en outre de former des fibres de carbone présentant de bonnes qualités, notamment mécaniques, et ce à un coût particulièrement avantageux, et bien inférieur à celui requis pour fabriquer des fibres de carbone à base de matériaux précurseurs conventionnels, tels que par exemple la cellulose purifiée, issue de l'industrie papetière, ou encore le polyacrylonitrile.

En particulier, le procédé selon l'invention, comportant une étape de préparation d'une fibre continue à base de cellulose, qui induit un réagencement des structures moléculaires au sein de la fibre, permet d'obtenir une fibre de carbone finale présentant des propriétés mécaniques bien meilleures que les fibres de carbone qui seraient obtenues par carbonisation directe des fibres de recyclage en coton. Le procédé selon l'invention permet en particulier avantageusement d'obtenir des fibres de carbone présentant une résistance à la contrainte supérieure à 1 200 MPa, et même supérieure ou égale à 2500 MPa, et un module de Young supérieur à 75 GPa, et même supérieur ou égal à 200 GPa, ce que ne permettent pas les procédés de fabrication de fibres de carbone à partir de coton de recyclage proposés par l'art antérieur. Ces propriétés mécaniques les rendent tout à fait adaptées à une utilisation dans des domaines d'application requérant une forte résistance des matériaux mis en oeuvre.

De manière plus générale, les fibres de carbone obtenues par le procédé de fabrication selon l'invention trouvent application dans de nombreux domaines, notamment pour la réalisation de matériaux ou de pièces destinées à être mises en oeuvre dans des domaines aussi variés que les domaines du bâtiment et des infrastructures, des équipements industriels, du transport automobile, ferroviaire ou naval, de l'électricité et de l'électronique, des sports et loisirs, des énergies renouvelables et notamment éoliennes, etc. A cet effet, elles peuvent être utilisées en l'état, assemblées sous forme de non-tissés ou encore sous forme tissée ou tricotée, le cas échéant en mélange avec d'autres types de fibres.

Les fibres de carbone obtenues par le procédé de fabrication selon l'invention peuvent avantageusement être utilisées, en raison de leur faible coût, en remplacement de fibres de verre dans des applications nécessitant l'utilisation de fibres de renfort de résistance à la contrainte modérée et de faible coût de revient. Par exemple, les fibres de carbone obtenues par le procédé selon l'invention peuvent être utilisées pour la fabrication de structures dans le domaine du bâtiment ou de la production d'énergies renouvelables, telles que des pales d'éoliennes ou d'hydroliennes, en remplacement de tout ou partie des fibres de verre qui y étaient mises en oeuvre jusqu'à présent. Les fibres de carbone selon l'invention peuvent par exemple être utilisées pour remplacer 5 à 40 %, en particulier 10 à 30 %, de ces fibres de verre.

Une pale d'éolienne, ou une pale d'hydrolienne, de grandes dimensions, c'est-à-dire d'au moins 30 mètres de longueur, et typiquement de 40 à 100 mètres de longueur, peut être formée en matériau composite à base de fibres de renfort dispersées dans une matrice de résine polymère, et comprenant en tant que fibres de renfort de la pale, cette dernière étant typiquement formée de deux demi-pales, entre 5 et 40 %, et de préférence entre 10 et 30 %, de fibres de carbone issues de cellulose obtenues par un procédé de fabrication selon l'invention, le restant des fibres de renfort étant constitué par des fibres de verre. La densité de ces fibres de carbone issues de cellulose est de préférence avantageusement comprise entre 1,3 et 1,8 g/m³, alors que la densité des fibres de verre est environ égale à 2,2 g/m³. Le pourcentage ci-avant de fibres de carbone issues de cellulose obtenues selon l'invention, par rapport à la quantité totale de fibres de renfort, est défini pour les fibres de renfort de la voilure de la pale, et s'entend en plus du pourcentage de fibres de carbone comprises dans le longeron en composite résine-carbone (couramment désigné par l'expression « spar cap »), qui est incorporé pour les pales de grandes dimensions à l'intérieur de la pale, dans le volume défini par les demi-pales.

Le pourcentage et la répartition des fibres de carbone issues de cellulose dans la pale est calculé notamment selon plusieurs critères : dimensions et propriétés mécaniques, poids, encombrement, énergie du moteur, puissance cible de l'éolienne (avantageusement 3 à 8 MW).

Les pales d'éoliennes ou analogues (d'hydroliennes par exemple) ainsi obtenues permettent, pour une longueur et des propriétés mécaniques cibles, de diminuer la puissance requise des moteurs de la structure.

Le procédé selon l'invention peut en outre répondre à l'une ou plusieurs des caractéristiques décrites ci-après, mises en oeuvre isolément ou en chacune des leurs combinaisons techniquement opérantes.

Le traitement mécanique du produit manufacturé en coton, visant à en extraire le coton sous forme de courtes fibres, mis en oeuvre à l'étape a2/ du procédé selon l'invention, peut être réalisé selon toute méthode connue de l'homme du métier.

Ce traitement mécanique peut notamment comprendre le défibrage du produit, puis son effilochage pour en extraire les fibres.

Cette étape peut être précédée de diverses opérations de prétraitement, telles que le nettoyage et/ou le dépoussiérage, la découpe, ainsi que l'élimination des parties du produit ne comportant pas uniquement du coton, telles que les boutons, les coutures, les fermetures éclairs, les éléments de flocage, etc.

Elle peut également être précédée, ou suivie, de diverses autres opérations de traitement mécanique ou chimique, du produit manufacturé ou des fibres de coton de recyclage qui en sont issues, par exemple de désencrage, de sorte à débarrasser le coton usagé des traces éventuelles d'éléments minéraux et organiques non cellulosiques ayant servi à son ennoblissement, tels que les teintures, les apprêts, etc.

Dans des modes de mise en oeuvre particuliers de l'invention, les fibres entrant dans la constitution du produit manufacturé sont exclusivement des fibres de coton, à l'exclusion de toute autre matière. Un tel produit est notamment désigné par l'expression « 100 % coton »

Dans un tel mode de mise en oeuvre, préférentiellement, le procédé selon l'invention ne comporte pas d'étape de purification avancée des fibres de coton de recyclage, telles que celles mises en oeuvre par l'art antérieur pour préparer, à partir de biomasse lignocellulosique, la cellulose destinée à la fabrication des fibres de carbone. En cela, le temps et le coût nécessaires à la fabrication de fibres de carbone par le procédé selon l'invention sont largement inférieurs à ceux des procédés conventionnels de préparation de fibres de carbone à partir de biomasse lignocellulosique. Le coût de la matière première cellulosique soumise à l'étape de filage est en particulier largement inférieur à celui des procédés conventionnels de préparation de fibres de carbone.

Dans des variantes de l'invention, le produit manufacturé, à partir duquel est mis en oeuvre le procédé de fabrication d'une fibre de carbone selon l'invention, contient des fibres en matière(s) autre(s) que le coton, en particulier des fibres synthétiques non cellulosiques. On peut à cet égard citer par exemple les filaments synthétiques de polytéréphtalate d'éthylène (PET) couramment désignés par le terme polyester, les fibres acryliques (par exemple de polyacrylonitrile PAN), les fibres d'élasthanne, un copolymère de polyuréthane et de polyurée, ou encore les fibres de polyamide, communément désignées par le terme nylon.

Le mélange le plus courant utilisé dans l'industrie textile est le mélange PET-coton, aussi appelé polycoton.

Le taux massique de fibres synthétiques non cellulosiques dans un mélange de fibres de coton et de fibres synthétiques entrant dans la constitution d'un produit manufacturé textile peut varier de 0 à 50 %.

Lorsque de telles fibres synthétiques sont contenues dans le produit manufacturé sur lequel est appliqué le procédé selon l'invention, à l'issue de l'étape a2/ de traitement mécanique du produit pour en extraire les fibres de coton de recyclage, ces fibres synthétiques se caractérisent par des diamètres généralement compris entre 10 et 20 µm et des longueurs qui dépendent du type de traitement mécanique particulier ayant été réalisé.

Dans des modes de mise en oeuvre particuliers de l'invention, le procédé de fabrication d'une fibre de carbone comprend une étape d'élimination d'impuretés auxquelles les fibres de coton de recyclage obtenues à l'issue de l'étape a2/ de traitement mécanique sont éventuellement mélangées à l'issue de cette étape, en particulier des fibres synthétiques (par opposition aux fibres de coton, qui sont des fibres naturelles) non cellulosiques éventuellement mélangées aux fibres de coton de recyclage, par exemple des fibres de polyester, des fibres d'élasthanne, et/ou des fibres de toute autre matière qui seraient susceptibles de diminuer le rendement du procédé de filage en voie solvant mis en oeuvre selon l'invention, notamment de boucher la filière de filage et/ou gêner la coagulation.

Cette étape d'élimination d'impuretés peut être mise en oeuvre avant ou après l'étape a3/ de dissolution des fibres de coton de recyclage dans la solution solvant, c'est-à-dire avant ou après la préparation de la solution de filage. Elle est toujours mise en oeuvre avant l'étape a4/ de fabrication d'une fibre continue par filage en voie solvant.

Elle peut être réalisée par des moyens de séparation mécaniques, chimiques et/ou enzymatiques, classiques en eux-mêmes.

Plusieurs telles étapes d'élimination peuvent être réalisées successivement, certaines pouvant être mises en oeuvre avant, et d'autres après, l'étape a3/ de préparation de la solution de filage.

La réalisation conformément à l'invention d'une telle étape de séparation des impuretés, et plus particulièrement des fibres synthétiques, qui sont mélangées aux fibres de coton de recyclage selon l'invention, facilite avantageusement la mise en oeuvre de l'étape de filage par voie solvant et augmente le rendement du procédé de fabrication d'une fibre de carbone selon l'invention.

Dans des variantes de l'invention, l'étape d'élimination des impuretés, en particulier des fibres synthétiques non cellulosiques, mélangées aux fibres de coton de recyclage, est réalisée après l'étape a3/ de préparation de la solution de filage, c'est-à-dire après la dissolution des fibres de coton de recyclage dans la solution solvant, solution d'acide phosphorique. Le solvant mis en oeuvre dans cette étape a3/ dissout les fibres de coton de recyclage mais ne dissout pas les fibres synthétiques non cellulosiques. L'étape d'élimination des impuretés comprend alors la séparation des fibres non dissoutes de la solution de filage.

Cette séparation peut avantageusement être conduite par filtration mécanique. Elle peut s'effectuer en deux étapes. Une première étape de filtration peut consister à placer la solution de filage, contenant les impuretés non dissoutes, dans un dispositif de type filtre-presse équipé de filtres de maillage 350x350 µm. La solution est filtrée sous 7 à 10 bars de pression. Cette opération permet d'obtenir une solution intermédiaire débarrassée des plus longues fibres synthétiques, c'est-à-dire les fibres de plus de 1 mm de long. Une deuxième étape de filtration peut utiliser un filtre tri-couche comprenant des tamis de maillage respectivement 60x60 µm, 80x80 µm et 350x500 µm. La solution de filage peut être filtrée sur ces filtres successifs sous pression de 10 à 50 bars, et récupérée. Cette deuxième étape permet d'éliminer la totalité des fibres synthétiques non dissoutes dans la solution de filage.

Une telle séparation par filtration mécanique permet avantageusement de séparer l'intégralité des fibres synthétiques non dissoutes, quelle que soit leur nature chimique, de manière non sélective.

Dans d'autres variantes de l'invention, l'étape d'élimination des impuretés, en particulier des fibres synthétiques non cellulosiques, mélangées aux fibres de coton de recyclage, est réalisée avant l'étape a3/ de préparation de la solution de filage, c'est-à-dire avant la dissolution des fibres de coton de recyclage dans la solution solvant.

L'étape d'élimination des impuretés comprend alors la séparation des fibres synthétiques non cellulosiques et des fibres de coton de recyclage. Cette séparation peut être réalisée par toute méthode classique en elle-même.

Elle peut par exemple être réalisée par dissolution sélective des fibres synthétiques non cellulosiques, en utilisant un solvant spécifique du type de fibres synthétiques à éliminer.

A titre d'exemple, lorsque les fibres synthétiques sont des fibres de polyester, ces dernières peuvent être dissoutes un mélange de dichlorométhane et tétrahydrofurane, ceci sans dégradation des fibres de coton de recyclage présentes dans le mélange. Des solutions de soude caustique concentrée et à chaud peuvent autrement être utilisées pour dissoudre les fibres de polyester.

Les fibres de polyester peuvent autrement être éliminées par dépolymérisation, par exemple par glycolyse, comme décrit notamment dans le document FR 2 998 572. La glycolyse peut par exemple être réalisée par mise du mélange de fibres de polyester et de fibres de coton de recyclage en présence d'éthylène glycol et d'acétate de zinc et chauffage à 198 °C sous reflux. Des cristaux de bishydroxyethyl téréphtalate, un des monomères du PET, sont obtenus par précipitation.

Lorsque les fibres synthétiques sont des fibres d'élasthanne, deuxième composé majoritaire après le PET dans les produits textiles manufacturés à base coton, le mélange de fibres d'élasthanne et de fibres de coton de recyclage peut par exemple être mis en présence de diméthylformamide ou d'éthanol à chaud, notamment à environ 220 °C, puis soumis à une phase de mélange par ultrasons pour provoquer la dissolution sélective des fibres d'élasthanne, comme décrit notamment dans la publication de Yin et al., 2014, dans Text. Res. J. 84, 16-27.

L'étape de séparation des fibres synthétiques non cellulosiques et des fibres de coton de recyclage peut autrement être réalisée par dégradation enzymatique sélective des fibres synthétiques non cellulosiques.

La dissolution des fibres de coton de recyclage dans la solution solvant peut être assistée par un traitement thermique, par exemple par chauffage sous pression réduite, puis refroidissement à très basse température, de manière classique en elle-même.

Dans des modes de mise en oeuvre préférés de l'invention, dans l'étape a3/ de dissolution des fibres de coton de recyclage dans la solution solvant, les fibres de coton de recyclage sont mélangées à de la cellulose purifiée.

On entend dans la présente description, par cellulose purifiée, la cellulose obtenue à partir de biomasse lignocellulosique, en particulier la cellulose dite papetière, c'est-à-dire issue d'un procédé papetier et présentant un degré plus élevé de pureté que la cellulose contenue dans les fibres de coton de recyclage obtenues selon l'invention. La cellulose purifiée est couramment mise en oeuvre, dans les procédés de l'art antérieur, pour la fabrication de fibres de carbone.

La cellulose purifiée mise en oeuvre dans le cadre de la présente invention peut être issue de bois de feuillu ou résineux, de plantes annuelles, comme la paille ou le coton, etc. Elle peut avoir été obtenue par toute méthode classique en elle-même, par exemple par un procédé de cuisson kraft ou à la soude.

Dans le mélange de fibres de coton de recyclage et de cellulose purifiée incorporé dans la solution de filage, la cellulose purifiée est de préférence présente dans une quantité en poids comprise entre 20 et 90 %, de préférence comprise entre 40 et 60 %, par exemple d'environ 50 %, par rapport au poids total du mélange de fibres de coton de recyclage et de cellulose purifiée.

La quantité totale de cellulose, issue des fibres de coton de recyclage, et le cas échéant de la cellulose purifiée qui lui est adjointe, dissoute dans la solution solvant à l'étape a3/, est comprise entre 1 et 50 % en poids, de préférence entre 5 et 30 % en poids, et par exemple entre 10 et 20 % en poids, par rapport au poids total de la solution de filage obtenue.

Ainsi, dans l'étape a3/ du procédé selon l'invention, la concentration en fibres de coton de recyclage, le cas échéant en mélange de fibres de coton de recyclage et de cellulose purifiée, dissoutes dans la solution solvant, est comprise entre 1 et 50 % en poids, de préférence entre 5 et 30 % en poids, et par exemple entre 10 et 20 % en poids, par rapport au poids total de la solution de filage obtenue.

Les fibres de coton de recyclage peuvent également être mélangées avec d'autres substances que la cellulose purifiée, par exemple avec de la lignine ou du polyacrylonitrile, permettant avantageusement de former des fibres de carbone à propriétés mécaniques encore améliorées, présentant notamment une résistance à la contrainte supérieure à 4 000 MPa. Ces propriétés mécaniques les rendent particulièrement adaptées à une utilisation dans des domaines d'application requérant une très forte résistance des matériaux mis en oeuvre, par exemple pour la fabrication de réservoirs à hydrogène.

La solution de filage peut être filtrée, pour en éliminer les particules solides, avant de procéder à l'étape suivante du procédé selon l'invention.

Le procédé selon l'invention peut comprendre l'ajout dans la solution de filage d'un ou plusieurs additifs, visant à mieux structurer la matière, à améliorer les propriétés mécaniques des fibres formées, etc.

Chacun de ces additifs peut notamment être présent dans la solution de filage à une teneur comprise entre 1 ppm et 10 % en poids, par rapport au poids total de la solution de filage, de préférence entre 1 ppm et 5 % en poids, par exemple entre 100 ppm et 1 % en poids, par rapport au poids total de la solution de filage.

Des exemples d'additifs pouvant être ajoutés à la solution de filage selon l'invention sont les agents compatibilisants, tels que des polymères ou co-polymères greffés anhydrides maléiques. A titre d'exemple, on peut notamment citer le Lotader^{®} 3300 commercialisé par la société Arkema, ou encore le Beiwa^{®} 901 de DzBh.

Dans des modes de mise en oeuvre particuliers de l'invention, une charge carbonée de taille nanométrique, ou plusieurs charges carbonées de taille nanométrique, est(sont) ajoutée(s) à la solution de filage, lors de la mise en oeuvre de l'étape c/ du procédé selon l'invention, ou juste avant ou après. Les charges carbonées de taille nanométrique sont de préférence ajoutées à la solution de filage dans une quantité comprise entre 1 ppm et 30 % en poids par rapport au poids de fibres de coton de recyclage, le cas échéant par rapport au poids du mélange de fibres de coton de recyclage et de cellulose purifiée, dissoutes dans la solution solvant lors de l'étape c/. Cette concentration est préférentiellement comprise entre 0,001 et 5 %, et notamment comprise entre 0,01 et 5 %.

On entend ici, par « charge carbonée de taille nanométrique », une charge comprenant un élément du groupe formé des nanotubes de carbone mono ou multifeuillets, des nanofibres de carbone, du graphène, d'oxyde de graphène, d'oxyde de graphène réduit, des fullerènes, des nanofibrilles de cellulose, des nanocristaux de cellulose et du noir de carbone, ou tout mélange de tels éléments. De préférence, les charges carbonées de taille nanométrique intégrées dans la solution de filage selon l'invention sont des nanotubes de carbone, seuls ou en mélange avec du graphène. Des nanotubes de carbone sont par exemple commercialisés par la société Arkema sous le nom Graphistrength^{®}.

Les charges carbonées de taille nanométrique selon la présente invention peuvent présenter une plus petite dimension comprise entre 0,1 et 200 nm, de préférence entre 0,1 et 160 nm, et préférentiellement entre 0,1 et 50 nm. Cette dimension peut par exemple être mesurée par diffusion de la lumière.

On entend par « graphène », selon la présente invention, un feuillet de graphite plan, isolé et individualisé, mais aussi, par extension, un assemblage comprenant entre un et quelques dizaines de feuillets et présentant une structure plane ou plus ou moins ondulée. Cette définition englobe ainsi les FLG (pour l'anglais Few Layer Graphene, c'est-à-dire du graphène faiblement empilé), les NGP (pour l'anglais Nanosized Graphene Plates, c'est-à-dire des plaques de graphène de dimension nanométrique), les CNS (pour l'anglais Carbon NanoSheets, c'est-à-dire des nano-feuilles de graphène), les GNR (pour l'anglais Graphene NanoRibbons, c'est-à-dire des nano-rubans de graphène). Elle exclut en revanche les nanotubes et nanofibres de carbone, qui sont respectivement constitués de l'enroulement d'un ou plusieurs feuillets de graphène de manière coaxiale et de l'empilement turbostratique de ces feuillets.

Les charges carbonées de taille nanométrique sont de préférence incorporées dans la solution de filage selon l'invention sous forme d'une dispersion liquide, pouvant être aqueuse ou solvantée.

La dispersion des charges carbonées de taille nanométrique peut être réalisée par une sonde à ultrasons, un broyeur à billes, un mélangeur haut cisaillement, ou tout autre dispositif classiquement mis en oeuvre, et le cas échéant en présence d'un agent tensioactif.

Le procédé de filage mis en oeuvre à l'étape a4/ du procédé selon l'invention, pour former une fibre de cellulose continue, peut être de tout type connu de l'homme du métier.

Comme exposé ci-avant, dans cette étape, la solution de filage est injectée à travers une filière de filage constituée d'un ou plusieurs trous, dans un bain de coagulation, en statique ou en écoulement, directement dans le bain (selon la méthode dite au mouillé, en anglais « wet-spinning ») ou à travers un espace d'air (selon la méthode dite avec espace d'air, en anglais « dry-jet wet spinning »). Au contact du bain de coagulation, la fibre se solidifie. On obtient alors avantageusement une fibre continue à base de cellulose.

Le bain de coagulation mis en oeuvre peut présenter toute composition classique en elle-même, en fonction du solvant entrant dans la constitution de la solution de filage et du type de procédé de filage en voie solvant particulier mis en oeuvre.

Par exemple, le bain de coagulation peut être formé à base d'isopropanol, d'eau, d'acétone, ou de tout autre solvant permettant la coagulation de la cellulose à son contact, ou de l'un quelconque de leurs mélanges.

Le procédé de filage en voie solvant mis en oeuvre peut être de tout type classique en lui-même mettant en oeuvre de l'acide phosphorique en tant que solvant pour la solution de filage.

Des exemples particuliers de procédés de filage en voie solvant pouvant être mis en oeuvre dans le cadre de l'invention sont notamment décrits dans les documents WO 85/05115, US 5,817,801, US 5,804,120, ou encore les publications de Boerstel, 2001, dans Polymer, 42: 7371-7379.

Dans un mode de mise en oeuvre particulier de l'invention, la solution de filage est formée à base d'acide phosphorique, le cas échéant en présence d'un émulsionnant non ionique, et le bain de coagulation est formé d'isopropanol, seul ou en mélange avec l'eau.

La fibre continue à base de cellulose obtenue par le procédé de filage selon l'invention, pouvant se présenter sous forme de monofilament ou de multifilaments, peut ensuite être lavée et séchée.

Le cas échéant, elle est soumise à une étape d'étirage, pour former une fibre de plus grande longueur.

L'étape d'étirage des fibres peut être réalisée selon toute méthode et au moyen de tout appareillage connus de l'homme du métier pour la réalisation d'une telle opération. Elle peut notamment être réalisée à une température provoquant un ramollissement du matériau constituant les fibres. A cet effet, les fibres défilent successivement sur un banc de rouleaux dits d'alimentation, à travers un four porté à ladite température, puis sur un banc de rouleaux dits d'étirage. Elles subissent un étirage entre les deux bancs de rouleaux, selon le rapport des vitesses de rotation des rouleaux d'alimentation et des rouleaux d'étirage. Elles peuvent autrement être étirées sur des rouleaux chauffants tournant à différentes vitesses.

Un tel étirage permet avantageusement d'aligner les chaines polymères le long de l'axe des fibres.

Les fibres peuvent éventuellement être traitées en sortie de filage, par des traitements par rayonnements, tels que des rayons gamma, des rayons beta, des faisceaux d'électrons, des rayons UV.

Ensuite, la fibre à base de cellulose obtenue, qui peut présenter une longueur importante, peut être mise en bobine, par exemple sur un tube en carton.

La fibre à base de cellulose obtenue selon la présente invention peut ensuite être ensimée, de manière classique en elle-même, avant d'être soumise à l'étape de carbonisation afin d'obtenir une fibre de carbone continue.

Dans une variante de l'invention, les charges carbonées de taille nanométrique sont introduites dans le bain d'ensimage, et non dans la solution de filage comme exposé ci-avant.

L'étape b/ de carbonisation de la fibre continue à base de cellulose du procédé selon l'invention est réalisée de manière classique en elle-même, en mettant en oeuvre toute combinaison de paramètres opératoires décrite dans l'art antérieur pour la carbonisation de fibres de cellulose.

Elle est de préférence réalisée sous atmosphère inerte.

La carbonisation peut être réalisée en continu, la fibre défilant dans le four de carbonisation, ou en discontinu, c'est-à-dire en mode statique, la fibre étant de préférence maintenue sous tension dans le four.

Préalablement à la carbonisation, la fibre peut être imprégnée par un agent aidant à la carbonisation, tel qu'un siloxane.

La carbonisation peut être réalisée à une température comprise entre 1000 et 1500°C, et précédée ou non d'une étape de stabilisation sous air à une température de l'ordre de 250°C.

Le cas échéant, préalablement à l'étape de carbonisation, la fibre continue à base de cellulose peut être imprégnée d'agents dits de carbonisation, favorisant l'augmentation des propriétés mécaniques de la fibre de carbone finalement obtenue et l'augmentation du rendement carbone de l'étape de carbonisation. Ces agents de carbonisation sont classiques en eux-mêmes.

Dans des modes de mise en oeuvre particuliers de l'invention, le four de carbonisation est hermétiquement fermé et mis sous vide jusqu'à une valeur inférieure à 1.10⁴ Pa (0,1 bar). Il est ensuite rempli d'un gaz inerte, tel que de l'azote, de l'argon, etc., et une fuite de gaz est créée de manière à ce que le débit de gaz soit compris entre 50 et 500 renouvellements de volume par heure. La pression dans le four est de préférence comprise entre 1.10³ Pa et 5.10⁴ Pa au-dessus de la pression atmosphérique. La température appliquée dans le four de carbonisation est de préférence comprise entre 800°C et 1500°C.

On obtient, à l'issue de ce traitement de carbonisation, une fibre de carbone.

Cette fibre de carbone peut ensuite être soumise, le cas échéant, à un traitement de graphitisation, de sorte à obtenir une meilleure structuration du carbone, et de ce fait des propriétés mécaniques plus avantageuses. Ce traitement peut par exemple être réalisé par chauffage de la fibre jusqu'à une température comprise entre 2000 et 3000°C, sous gaz inerte, pendant une durée comprise entre 5 et 20 minutes.

La fibre à base de cellulose selon l'invention peut autrement être carbonisée en continu, en la faisant défiler successivement dans différents fours, dont un four de carbonisation sous atmosphère inerte à une température comprise entre 800°C et 1500°C, puis un four de graphitisation à une température pouvant aller jusqu'à 2500°C. La vitesse de défilement de la fibre dans ces fours est alors préférentiellement comprise entre 1 et 100 m/h.

La fibre de carbone obtenue à l'issue du procédé selon l'invention peut présenter un diamètre compris entre 5 et 30 micromètres, et une longueur de quelques mètres.

Dans des modes de mise en oeuvre particuliers de l'invention, le procédé comprend une étape de formation d'une nappe de fibres à base de cellulose à partir d'une pluralité de fibres continues à base de cellulose obtenues à l'étape a4/ ou a5/. L'étape b/ de carbonisation de cette fibre continue à base de cellulose est alors réalisée par carbonisation de la nappe de fibres continues à base de cellulose, pour former une nappe à base de fibres de carbone.

La nappe formée des fibres à base de cellulose obtenues selon l'invention peut présenter toute forme et toutes dimensions. Les fibres peuvent y être agencées en tissus de différents grammages et tissages, par exemple en taffetas, sergé, satin, etc., utilisés seuls ou en associations, ou en non tissés, par exemple dans lesquels les fibres sont toutes orientées dans la même direction, ou dans lesquels les fibres sont orientées aléatoirement, tels que les voiles, feutres ou films non tissés. On parle alors de nappes unidirectionnelles.

Les fibres continues à base de cellulose obtenues selon l'invention peuvent être mises en oeuvre, dans la nappe, seules ou en association avec d'autres types de fibres.

La carbonisation de la nappe de fibres continues à base de cellulose peut être réalisée selon toute méthode de carbonisation connue de l'homme du métier, en mode statique ou en défilement continu dans un four de carbonisation. Les caractéristiques exposées ci-avant en référence au traitement des fibres individuelles s'appliquent de manière similaire pour la carbonisation de la nappe de fibres continues à base de cellulose selon l'invention.

Les nappes de fibres continues à base de cellulose obtenues selon l'invention peuvent être soumises à carbonisation individuellement, ou sous forme d'un empilement de nappes, à plat ou le cas échéant après mise en forme selon une forme souhaitée.

Une fibre de carbone obtenue par un procédé selon l'invention répond à l'une ou plusieurs des caractéristiques ci-avant.

Cette fibre de carbone est continue, et elle peut présenter un diamètre compris entre 1 et 1000 µm, de préférence compris entre 15 et 30 µm, et une longueur de quelques mètres.

Elle peut avantageusement présenter une résistance à la contrainte supérieure à 1200 MPa, de préférence supérieure ou égale à 2000 MPa, et/ou un module de Young supérieur à 75 GPa, de préférence supérieur ou égal à 200 GPa, ces paramètres étant mesurés selon la norme ISO 11566.

Une fibre continue à base de cellulose obtenue en tant que produit intermédiaire lors de la mise en oeuvre d'un procédé de fabrication d'une fibre de carbone selon l'invention, à l'issue de l'étape a/ de ce procédé, est constituée à partir de coton de recyclage, seul ou en mélange avec d'autres constituants, come listé ci-avant.

Cette fibre continue à base de cellulose peut présenter un diamètre compris entre 10 et 30 µm, et/ou une résistance comprise entre 20 et 40 cN/tex, et /ou un module de Young compris entre 15 et 30 GPa, ces paramètres étant mesurés selon la norme ISO 2062.

Elle est avantageusement stockable et transportable.

Une nappe de fibres de carbone peut être obtenue à partir de fibres de carbone obtenues selon l'invention, lesdites fibres de carbone étant tissées ou tricotées entre elles ou y étant juxtaposées sous forme de non-tissé.

Une nappe de fibres de carbone peut être obtenue par un procédé de fabrication d'une fibre de carbone selon l'invention, ce procédé comportant une étape de formation d'une nappe de fibres à base de cellulose à partir d'une pluralité de fibres continues à base de cellulose obtenues à l'étape a4/ ou a5/ du procédé, et une étape de carbonisation de ladite nappe de fibres continues à base de cellulose, pour former une nappe à base de fibres de carbone.

Une structure tridimensionnelle fibreuse peut être obtenue par empilement d'une pluralité de nappes de fibres continues à base de cellulose obtenues selon l'invention, ou par empilement d'une pluralité de nappes de fibres de carbone obtenues selon l'invention, le cas échéant mises en forme à la forme souhaitée, par exemple pour constituer une préforme pour la fabrication d'un article en matériau composite à base de fibres de renfort distribuées dans un liant.

Une fibre de carbone ou une nappe de fibres de carbone obtenues selon l'invention peuvent être utilisées pour la fabrication d'un article en matériau composite à base de fibres de carbone distribuées dans une matrice de résine organique polymère.

Un autre aspect de l'invention concerne un procédé de fabrication d'un article en matériau composite à base de fibres de carbone distribuées dans une matrice de résine organique polymère, ce procédé comprenant :
- la mise en oeuvre d'un procédé de fabrication d'une fibre de carbone selon l'invention, comprenant la fabrication d'une fibre de carbone par carbonisation d'une fibre continue à base de cellulose individuelle, et la formation d'une nappe de fibres de carbone à partir d'une pluralité des fibres de carbone ainsi obtenues ; ou la mise en oeuvre d'un procédé de fabrication d'une fibre de carbone selon l'invention, comprenant la formation d'une nappe de fibres continues à base de cellulose et la carbonisation de cette nappe de fibres pour former une nappe à base de fibres de carbone ;
- et la fabrication d'un article en matériau composite à partir d'une pluralité de nappes de fibres de carbone ainsi obtenues.

La fabrication d'un article en matériau composite à partir d'une pluralité de nappes de fibres de carbone obtenues conformément à la présente invention peut être réalisée selon toute méthode classique en elle-même pour l'homme du métier.

Un matériau composite est défini dans toute la présente description de manière classique, c'est-à-dire comme constitué par l'assemblage de plusieurs matériaux ou composants élémentaires différents liés entre eux, plus particulièrement de fibres longues mécaniquement résistantes, dans le cas présente de fibres de carbone, distribuées dans une matrice de résine organique polymère. Le terme résine définit ici un composé polymère, pouvant être du type thermoplastique ou thermodurcissable, qui joue le rôle d'une colle structurale dans laquelle les fibres sont dispersées de manière plus ou moins organisée. Le matériau composite ainsi formé présente des propriétés mécaniques qui lui sont propres, tout à fait avantageuses en termes de résistance mécanique et de légèreté.

Schématiquement, la fabrication d'un tel matériau composite consiste en un moulage selon la forme souhaitée d'un empilement d'une pluralité de nappes de fibres de carbone imprégnées de la résine organique non polymérisée, dans des conditions, notamment de température, provoquant la polymérisation de cette résine.

L'article en matériau composite obtenu selon l'invention peut par exemple être fabriqué en utilisant la technique de drapage de plis préimprégnés de résine, au moins certains de ces plis étant constitués par les nappes de fibres de carbone obtenues selon l'invention, puis polymérisation de l'ensemble en autoclave de manière à former, de façon classique, le matériau composite ; ou encore par des techniques d'injection ou d'infusion de résine, notamment par la technique par transfert de résine, dite de RTM, pour l'anglais « Resin Transfer Moulding », sur des plis de fibres sèches, certains de ces plis étant constitués par les nappes de fibres de carbone obtenues selon l'invention.

Le matériau composite fabriqué selon la présente invention peut être de type monolithique et/ou de type sandwich, par exemple à structure nid d'abeille.

Les fibres peuvent y être agencées en tissus de différents grammages et tissages, par exemple en taffetas, sergé, satin, etc., utilisés seuls ou en associations, ou en non tissés, par exemple dans lesquels les fibres sont toutes orientées dans la même direction.

Les fibres de carbone obtenues conformément à la présente invention peuvent y être mises en oeuvre seules, ou bien en association avec un ou plusieurs autres types de fibres, toute configuration d'une telle association entrant dans le cadre de la présente invention.

Toute résine classique en elle-même peut être utilisée dans le cadre de l'invention, notamment les résines du type thermodurcissable, par exemple les résines époxy, les résines phénoliques ou un mélange des deux, ou encore les résines thermoplastiques.

Un article en matériau composite à base de fibres de carbone distribuées dans une matrice de résine organique polymère obtenu par un procédé de fabrication selon l'invention répond à l'une ou plusieurs des caractéristiques ci-avant.

Un tel article en matériau composite trouve avantageusement application dans de nombreux domaines.

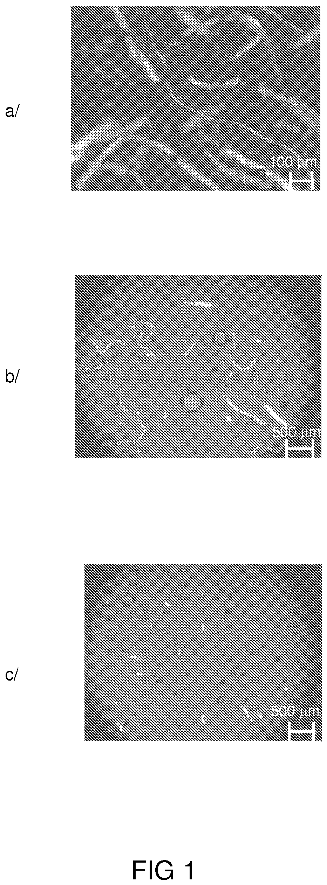

Les caractéristiques et avantages de l'invention apparaîtront plus clairement à la lumière des exemples de mise en oeuvre ci-après, fournis à simple titre illustratif et nullement limitatifs de l'invention, avec l'appui de la figure 1 qui montre des images acquises par microscopie d'une solution de filage formée au cours de la mise en oeuvre d'un procédé de fabrication de fibre de carbone selon l'invention à partir d'un produit manufacturé textile à base de coton, polyester et élasthanne, respectivement en a/ avant séparation des fibres synthétiques, en b/ après une première étape de séparation par filtration et en c/ après une deuxième étape de séparation par filtration des fibres synthétiques de la solution de filage..

### Exemple 1 - recyclage d'un pantalon 100 % coton

A titre d'exemple, un procédé de fabrication d'une fibre de carbone selon l'invention est mis en oeuvre à partir d'un produit textile en coton, tel qu'un pantalon 100 % coton.

Selon l'invention, ce pantalon est débarrassé de ses boutons, fermeture éclair, et autres éléments métalliques éventuels.

Il est ensuite découpé, et soumis à des opérations de défibrage puis effilochage, de manière classique en elle-même, pour obtenir des fibres de coton de petite dimension, de longueur inférieure à 5 mm.

Ces fibres sont dissoutes dans de l'acide phosphorique, dans une quantité en poids de 10 %, par rapport au poids total du mélange.

Il est ajouté à cette solution une dispersion aqueuse de nanotubes de carbone, formée au moyen d'un réacteur relié à un broyeur à billes et à une sonde à ultrasons, par dispersion de nanotubes de carbone dans une quantité de 0,9 % en poids, en présence de l'agent tensioactif commercialisé sous le nom Brij 520 à une concentration de 1,2 % en poids, dans l'eau.

Cette dispersion aqueuse est ajoutée à la solution de filage dans une quantité de 0,1 % en poids par rapport au poids de cellulose contenue dans la solution de filage. La qualité de dissolution est vérifiée par microscopie optique et par mesures de viscosité. Cette dispersion ne contient aucun agrégat de taille supérieure ou égale à 1 µm.

Il est également ajouté à cette solution un émulsifiant non-ionique, tel que le produit commercialisé sous le nom Emulan^{®}, dans une quantité de 0,2 % en poids par rapport au poids de cellulose contenu dans la solution de filage. Un tel émulsifiant non-ionique facilite avantageusement l'imprégnation de la cellulose des fibres de coton de recyclage par l'acide phosphorique.

Le mélange est chauffé à 45 °C pendant 15 min sous pression réduite de 100 mbar et sous agitation à 40 tr/min, puis refroidi pendant 3 h à -10 °C sous la même pression réduite et la même agitation. Il est ensuite placé à 0 °C pendant une nuit, toujours dans les mêmes conditions de pression réduite et d'agitation, et enfin refroidi à -10 °C.

Dans une variante du procédé selon l'invention, les fibres de coton de recyclage sont mélangées dans la solution d'acide phosphorique à de la cellulose issue de bois obtenue par un procédé papetier, de plus haut degré de pureté, par exemple dans un rapport en poids fibres de coton de recyclage / cellulose papetière de 20 / 80 ou de 50 / 50.

La solution de filage obtenue est extrudée à travers une filière de filage à 500 trous chacun de 80 µm de diamètre, et injectée directement dans un bain de coagulation composé d'un mélange isopropanol / eau (60 / 40 en volume).

Les paramètres de filage sont par exemple les suivants : température de la solution de filage 0 °C, vitesse de la pompe de transfert 800 trs/min, température du bain de coagulation 20 °C.

Il se forme dans le bain de coagulation des fibres de cellulose, dans lesquelles les nanotubes de carbone sont piégés et bien dispersés.

Les fibres ainsi formées sont entrainées dans un bain de neutralisation, à base d'hydroxyde de potassium KOH, à 20 °C, afin d'éliminer l'acide phosphorique restant sur les fibres, puis dans un bain de lavage à l'eau à 15 °C, avant d'être séchées par de l'air chaud dans un four à 250 °C.

Elles sont ensuite étirées sur des rouleaux chauffants à une température de 160 °C, de manière classique en elle-même.

Les fibres à base de cellulose sont ensuite mises en bobine à une vitesse de bobinage de 12,1 m/min.

On obtient une fibre multifilaments à base de cellulose, d'un diamètre d'environ 25 µm et de plusieurs mètres de longueur.

Cette fibre continue à base de cellulose présente une résistance comprise entre 20 et 40 cN/tex et un module de Young compris entre 15 et 30 GPa (ces paramètres étant mesurés selon la norme ISO 2062).

Cette fibre continue à base de cellulose peut ensuite être soumise à une étape de stabilisation sous air à une température de l'ordre de 250°C, préalablement à une étape de carbonisation statique sous azote et sous tension avec une rampe de température de 20 à 1200°C à 3°C/min.

Préalablement à l'étape de carbonisation, la fibre continue à base de cellulose peut être imprégnée d'agents dits de carbonisation, favorisant l'augmentation des propriétés mécaniques de la fibre de carbone finalement obtenue, et du rendement carbone de l'étape de carbonisation.

L'étape de carbonisation peut être suivie par une étape de graphitisation, par chauffage de la fibre jusqu'à une température comprise entre 2000 et 3000°C, sous gaz inerte, pendant une durée comprise entre 5 et 20 min.

Il est obtenu à l'issue de ce procédé une fibre de carbone présentant des propriétés mécaniques particulièrement satisfaisantes, notamment une résistance à la contrainte supérieure à 1 200 MPa et un module de Young supérieur à 75 GPa (ces paramètres étant mesurés selon la norme ISO 11566). Cette fibre de carbone a été obtenue à très bas coût, en comparaison des fibres de carbone formées par les procédés conventionnels proposés par l'art antérieur.

Cette fibre de carbone peut être utilisée pour de nombreuses applications, par exemple pour la fabrication d'articles en matériau composite, dans lesquels lesdites fibres sont dispersées dans une résine organique polymère.

### Exemple 2 - recyclage d'un pantalon en coton, polyester et élasthanne

Un procédé de fabrication d'une fibre de carbone selon l'invention est mis en oeuvre à partir d'un pantalon en coton majoritaire, à base également d'élasthanne et de polyester en quantités minoritaires.

Selon l'invention, ce pantalon est débarrassé de ses boutons, fermeture éclair, et autres éléments métalliques éventuels.

Il est ensuite découpé, et soumis à des opérations de défibrage puis effilochage, de manière classique en elle-même, pour obtenir des fibres de petite dimension, de longueur inférieure à 5 mm. Ces fibres comprennent des fibres de coton, des fibres synthétiques d'élasthanne (copolymère de polyuréthane et de polyurée) et des fibres synthétiques de polyester.

Selon une première variante, ce mélange de fibres est mélangé à une solution d'acide phosphorique, dans une quantité en poids de 10 %, par rapport au poids total du mélange. On obtient une solution de filage, dans laquelle les fibres de coton ont été dissoutes mais les fibres de polyester et d'élasthanne ne l'ont pas été. La figure 1 montre en a/ une image acquise par microscopie de cette solution. On y observe la présence de nombreuses fibres synthétiques non dissoutes. La solution de filage est filtrée afin d'éliminer les impuretés solides.

La filtration est réalisée en deux étapes :
- une première étape de filtration dans un dispositif de type filtre-presse équipé de filtres de maillage 350x350 µm, sous 7-10 bars de pression. A l'issue de cette étape, les fibres synthétiques les plus longues ont été éliminées de la solution, dans laquelle il reste de courtes fibres synthétiques, comme montré en b/ sur la figure 1 ;
- une deuxième étape de filtration utilisant un filtre tri-couche comprenant des tamis de maillage 60x60 µm, 80x80 µm et 350x500 µm, sous pression de 10 à 50 bars. Au terme de cette étape, on observe que la totalité des fibres synthétiques ont été éliminées de la solution, comme montré en c/ sur la figure 1

La solution récupérée, débarrassée des impuretés solides que formaient les fibres synthétiques non cellulosiques, constitue la solution de filage mise en oeuvre dans la suite du procédé de fabrication d'une fibre de carbone selon l'invention.

Selon une deuxième variante, le mélange de fibres est mélangé à du diméthylformamide à une température de 220 °C pendant 2 h, selon le protocole décrit dans la publication de Yin et al., 2014, dans Text. Res. J. 84, 16-27, afin d'en éliminer les fibres d'élasthanne. Le mélange de fibres de coton et de fibres de polyester récupéré est ensuite mélangé à une solution de dichlorométhane et de tétrahydrofurane, afin d'éliminer les fibres de polyester qui sont dissoutes dans cette solution. Les fibres de coton de recyclage non dissoutes, ainsi isolées, sont mélangées à une solution d'acide phosphorique, dans une quantité en poids de 10 %, par rapport au poids total du mélange, afin de former une solution de filage.

A partir des solutions de filage ainsi obtenues, le procédé est ensuite poursuivi comme décrit dans l'exemple 1 ci-avant.

Schématiquement, la solution de filage, à laquelle sont optionnellement ajoutés une dispersion aqueuse de nanotubes de carbone, un émulsifiant non-ionique et/ou de la cellulose purifiée, est extrudée à travers une filière de filage et injectée directement dans un bain de coagulation composé d'un mélange isopropanol / eau (60 / 40 en volume).

Il se forme dans le bain de coagulation des fibres continues de cellulose, qui sont neutralisées, puis séchées, et le cas échéant étirées.

Ces fibres continues à base de cellulose sont soumises à une étape de stabilisation sous air puis à une étape de carbonisation.

Ce procédé permet de former, avec un bon rendement et à bas coût, des fibres de carbone présentant des propriétés mécaniques particulièrement satisfaisantes.

En particulier, aucun effet de bouchage de la filière de filage n'est été observé au cours de la mise en oeuvre de ce procédé.

## Revendications

1. Procédé de fabrication d'une fibre de carbone par recyclage de coton, **caractérisé en ce qu'**il comprend des étapes de :
a/ préparation d'une fibre à base de cellulose, comprenant :
a1/ la collecte d'un produit manufacturé en coton,
a2/ le traitement mécanique dudit produit pour en extraire le coton sous forme de courtes fibres discontinues, dites fibres de coton de recyclage,
a3/ la dissolution desdites fibres de coton de recyclage dans une solution d'acide phosphorique en tant que solution solvant, pour former une solution dite de filage,
a4/ la fabrication d'une fibre continue à base de cellulose par un procédé de filage en voie solvant,
a5/ le cas échéant, l'étirage de la fibre continue à base de cellulose obtenue,
b/ et carbonisation de ladite fibre continue à base de cellulose pour former une fibre de carbone.

2. Procédé de fabrication d'une fibre de carbone selon la revendication 1, selon lequel ladite solution de filage contient un émulsifiant non-ionique.

3. Procédé de fabrication d'une fibre de carbone selon l'une des revendications 1 ou 2, comprenant une étape d'élimination d'impuretés auxquelles les fibres de coton de recyclage obtenues à l'issue de l'étape a2/ sont éventuellement mélangées à l'issue de cette étape, en particulier de fibres synthétiques.

4. Procédé de fabrication d'une fibre de carbone selon l'une quelconque des revendications 1 à 3, comprenant une étape d'élimination par filtration mécanique de fibres synthétiques non-cellulosiques contenues dans la solution de filage.

5. Procédé de fabrication d'une fibre de carbone selon l'une quelconque des revendications 1 à 4, selon lequel dans l'étape a3/ lesdites fibres de coton de recyclage sont mélangées à de la cellulose purifiée.

6. Procédé de fabrication d'une fibre de carbone selon l'une quelconque des revendications 1 à 5, selon lequel dans l'étape a3/ la concentration en fibres de coton de recyclage, le cas échéant en mélange de fibres de coton de recyclage et de cellulose purifiée, dissoutes dans la solution solvant, est comprise entre 5 et 30 % en poids.

7. Procédé de fabrication d'une fibre de carbone selon l'une quelconque des revendications 1 à 6, selon lequel une charge carbonée de taille nanométrique est ajoutée à la solution de filage.

8. Procédé de fabrication d'une fibre de carbone selon la revendication 7, selon lequel ladite charge carbonée de taille nanométrique est ajoutée à la solution de filage dans une concentration comprise entre 1 ppm et 5 % en poids par rapport au poids de fibres de coton de recyclage, le cas échéant par rapport au poids du mélange de fibres de coton de recyclage et de cellulose purifiée, dissoutes dans ladite solution solvant lors de ladite étape a3/.

9. Procédé de fabrication d'une fibre de carbone selon l'une quelconque des revendications 1 à 8, comprenant une étape de formation d'une nappe de fibres à base de cellulose à partir d'une pluralité de fibres continues à base de cellulose obtenues à l'étape a4/ ou a5/, et selon lequel l'étape b/ de carbonisation de ladite fibre continue à base de cellulose est réalisée par carbonisation de ladite nappe de fibres continues à base de cellulose, pour former une nappe à base de fibres de carbone.

10. Procédé de fabrication d'un article en matériau composite à base de fibres de carbone distribuées dans une matrice de résine organique polymère, **caractérisé en ce qu'**il comprend :
- la mise en oeuvre d'un procédé de fabrication d'une fibre de carbone selon l'une quelconque des revendications 1 à 8 et la formation d'une nappe de fibres de carbone à partir d'une pluralité des fibres de carbone obtenues, ou la mise en oeuvre d'un procédé de fabrication d'une fibre de carbone selon la revendication 9 pour former une nappe à base de fibres de carbone,
- et la fabrication dudit article en matériau composite à partir d'une pluralité de nappes de fibres de carbone ainsi obtenues.

## Patentansprüche

1. Verfahren zum Herstellen einer Kohlenstofffaser durch Recycling von Baumwolle, **dadurch gekennzeichnet, dass** es die folgenden Schritte umfasst:
a/ Herstellen einer Faser auf Zellulosebasis, das Folgendes umfasst:
a1/ Sammeln eines aus Baumwolle hergestellten Produkts,
a2/ mechanisches Behandeln des Produkts, um daraus Baumwolle in Form kurzer diskontinuierlicher Fasern, sogenannte recycelte Baumwollfasern, zu extrahieren,
a3/ Auflösen der recycelten Baumwollfasern in einer Phosphorsäurelösung als Lösungsmittellösung, um eine Spinnlösung zu bilden,
a4/ Herstellen einer Endlosfaser auf Zellulosebasis durch ein Lösungsmittel-Spinnverfahren,
a5/ gegebenenfalls Strecken der erhaltenen Endlosfaser auf Zellulosebasis,
b/ und Karbonisieren der Endlosfaser auf Zellulosebasis, um eine Kohlenstofffaser zu bilden.

2. Verfahren zum Herstellen einer Kohlenstofffaser nach Anspruch 1, bei dem die Spinnlösung einen nicht ionischen Emulgator enthält.

3. Verfahren zum Herstellen einer Kohlenstofffaser nach einem der Ansprüche 1 oder 2, das einen Schritt des Entfernens von Verunreinigungen umfasst, bei dem nach Schritt a2/ gegebenenfalls die erhaltenen recycelten Baumwollfasern am Ende dieses Schritts beigemischt werden, insbesondere synthetische Fasern.

4. Verfahren zum Herstellen einer Kohlenstofffaser nach einem der Ansprüche 1 bis 3, das einen Schritt des Entfernens der in der Spinnlösung enthaltenen synthetischen Nicht-Zellulosefasern durch mechanische Filtration umfasst.

5. Verfahren zum Herstellen einer Kohlenstofffaser nach einem der Ansprüche 1 bis 4, bei dem in Schritt a3/ die recycelten Baumwollfasern mit der gereinigten Zellulose vermischt werden.

6. Verfahren zum Herstellen einer Kohlenstofffaser nach einem der Ansprüche 1 bis 5, bei dem in Schritt a3/ die Konzentration der in der Lösungsmittellösung gelösten recycelten Baumwollfasern, gegebenenfalls einer Mischung aus recycelten Baumwollfasern und gereinigter Zellulose, zwischen 5 und 30 Gew.-% beträgt.

7. Verfahren zum Herstellen einer Kohlenstofffaser nach einem der Ansprüche 1 bis 6, bei dem der Spinnlösung ein kohlenstoffhaltiger Füllstoff in Nanogröße zugesetzt wird.

8. Verfahren zum Herstellen einer Kohlenstofffaser nach Anspruch 7, bei dem der kohlenstoffhaltige Füllstoff in Nanogröße der Spinnlösung in einer Konzentration zwischen 1 ppm und 5 Gew.-%, bezogen auf das Gewicht der recycelten Baumwollfasern, gegebenenfalls bezogen auf das Gewicht der Mischung aus recycelten Baumwollfasern und gereinigter Zellulose, die in der Lösungsmittellösung in Schritt a3/ aufgelöst werden, zugesetzt wird.

9. Verfahren zum Herstellen einer Kohlenstofffaser nach einem der Ansprüche 1 bis 8, das einen Schritt des Bildens einer Bahn aus Fasern auf Zellulosebasis aus einer Vielzahl von kontinuierlichen Fasern auf Zellulosebasis, die in Schritt a4/ oder a5/ erhalten wurden, umfasst und bei dem Schritt b/ des Karbonisierens der Endlosfaser auf Zellulosebasis durch Karbonisieren der Bahn aus Endlosfasern auf Zellulosebasis durchgeführt wird, um eine Bahn aus Kohlenstofffasern zu bilden.

10. Verfahren zum Herstellen eines Gegenstands aus Verbundmaterial auf Basis von Kohlenstofffasern, die in einer Matrix aus polymerem organischem Harz verteilt sind, **dadurch gekennzeichnet, dass** es Folgendes umfasst:
- Durchführen eines Verfahrens zum Herstellen einer Kohlenstofffaser nach einem der Ansprüche 1 bis 8 und Bilden einer Bahn aus Kohlenstofffasern aus einer Vielzahl von erhaltenen Kohlenstoffasern oder Durchführen eines Verfahrens zum Herstellen einer Kohlenstofffaser nach Anspruch 9, um eine Bahn auf Basis von Kohlenstofffasern zu bilden,
- und Herstellen des Gegenstands aus Verbundmaterial aus einer Vielzahl von auf diese Weise erhaltenen Bahnen aus Kohlenstofffasern.

## Claims

1. Method for producing a carbon fiber by recycling cotton, **characterized in that** it comprises steps of:
a/ preparing a cellulose-based fiber, comprising:
a1/ collecting a manufactured product made from cotton,
a2/ mechanically treating said product in order to extract cotton therefrom in the form of short, discontinuous fibers, referred to as recycled cotton fibers,
a3/ dissolving said recycled cotton fibers in a solution of phosphoric acid as a solvent solution, to form a so-called spinning solution,
a4/ producing a continuous cellulose-based fiber by means of a solvent spinning process,
a5/ optionally, stretching the continuous cellulose-based fiber obtained,
b/ and carbonizing said continuous cellulose-based fiber to form a carbon fiber.

2. Method for producing a carbon fiber according to claim 1, wherein said spinning solution contains a non-ionic emulsifier.

3. Method for producing a carbon fiber according to claim 1 or 2, comprising a step of removing impurities with which the recycled cotton fibers obtained at the end of step a2/ are potentially mixed at the end of this step, in particular synthetic fibers.

4. Method for producing a carbon fiber according to any one of claims 1 to 3, comprising a step of removing by filtration non-cellulosic synthetic fibers contained in the spinning solution.

5. Method for producing a carbon fiber according to any one of claims 1 to 4, wherein in step a3/ said recycled cotton fibers are mixed with purified cellulose.

6. Method for producing a carbon fiber according to any one of claims 1 to 5, wherein in step a3/ the concentration of recycled cotton fibers, if applicable of mixture of recycled cotton fibers and purified cellulose, dissolved in the solvent solution, is between 5 and 30% by weight.

7. Method for producing a carbon fiber according to any one of claims 1 to 6, wherein a nanosized carbonaceous filler is added to the spinning solution.

8. Method for producing a carbon fiber according to claim 7, wherein said nanosized carbonaceous filler is added to the spinning solution in a concentration of between 1 ppm and 5% by weight with respect to the weight of recycled cotton fibers, if applicable with respect to the weight of the mixture of recycled cotton fibers and purified cellulose, dissolved in said solvent solution during said step a3/

9. Method for producing a carbon fiber according to any one of claims 1 to 8, comprising a step of forming a web of cellulose-based fibers from a plurality of continuous cellulose-based fibers obtained in step a4/ or a5/, and whereby step b/ of carbonizing said continuous cellulose-based fiber is carried out by carbonizing said web of continuous cellulose-based fibers, to form a web of carbon fibers.

10. Method for producing an article in composite material made of carbon fibers distributed in an organic polymer resin matrix, **characterized in that** it comprises:
- implementing a method for producing a carbon fiber according to any one of claims 1 to 8 and forming a web of carbon fibers from a plurality of carbon fibers obtained, or implementing a method for producing a carbon fiber according to claim 9 to form a web of carbon fibers,
- and producing said article in composite material from a plurality of webs of carbon fibers thus obtained.
